# DEMANDE DE BREVET EUROPEEN

(11) **EP 0 898 408 A1**
(43) Date de publication de la demande: **24.02.1999**
(21) Numéro de dépôt: 98410094.1
(22) Date de dépôt: 19.08.1998
(51) Int. Cl.: H04M 11/00

(54) **Dispositif et procédé de communication**

(30) Priorité: 20.08.1997 FR 9710631
(71) Demandeur: SCHNEIDER ELECTRIC SA, 92100 Boulogne Billancourt (FR)
(72) Inventeur: Weynachter, Luc, 38050 Grenoble cedex 09 (FR)
(74) Mandataire: Jouvray, Marie-Andrée

(57) **Abrégé**

Le dispositif de communication comporte une centrale (1) et au moins une station (8) reliées par un réseau (2). La station comporte un circuit de contrôle (9) et un circuit de mémorisation (10) connecté au circuit de contrôle. Le circuit de mémorisation permet de mémoriser des données représentatives d'informations que la station doit envoyer à la centrale et des paramètres de conditions d'envoi associés auxdites informations. Lors d'une phase de paramétrage, la station reçoit les données et les paramètres à mémoriser. Puis, lors d'une phase de fonctionnement, le circuit de contrôle envoie des informations en fonction des paramètres de conditions d'envoi mémorisés.

## Description

L'invention concerne un dispositif de communication comportant une centrale et au moins une station, ainsi qu'un procédé de communication entre ladite centrale et ladite station.

Des dispositifs de communication connus comportent une centrale et des stations reliées par un réseau de communication. Les échanges d'informations entre les stations et la centrale se font généralement selon un mode communication maître-esclave ou de manière continue sur événement.

Dans le mode d'échange maître-esclave, la centrale demande une information à une station qui lui répond en renvoyant l'information demandée. Ce mode d'échange a l'avantage d'être simple. Cependant, le trafic d'informations sur le réseau devient important et il y a un risque de saturation dû au double flux d'informations. En effet, avant chaque information qu'une station doit envoyer à la centrale, il y a une requête de la centrale vers ladite station.

L'émission d'information sur événements ne nécessite pas de requête de la centrale à chaque échange d'information. Dans ce mode d'échange, une station émet toute seule une information à la centrale lorsqu'un événement est détecté par ladite station. Ce mode d'échange est également simple, mais le flux d'informations risque aussi d'être élevé. En effet, si la quantité de données susceptibles d'être envoyées par les stations est élevée, la centrale risque de recevoir une grande quantité d'informations inutiles qui encombrent le réseau de communication et diminuent par conséquent ces performances.

Le mode d'échange sur événement est bien adapté aux dispositifs de communication dans lesquels les stations ont peu d'information à envoyer. Mais, lorsque les stations sont associées notamment à des appareils complexes tels que des disjoncteurs comportant des déclencheurs électroniques ou des dispositifs de mesure ou de calcul de plusieurs grandeurs électriques, les modes d'échange en maître esclave ou sur événement ne permettent pas une utilisation optimale du réseau de communication.

L'invention a pour but un dispositif et un procédé de communication permettant une utilisation optimale d'un réseau de communication reliant une centrale à des stations.

Ce but est atteint par un dispositif selon la revendication 1.

Ladite au moins une station comporte , notamment, des moyens de contrôle pour envoyer des informations définies par des données de type d'information à envoyer en fonction des paramètres représentatifs de conditions d'envoi.

De préférence, au moins un des paramètres représentatifs de conditions d'envoi est représentatif de l'envoi d'information sur requête de la centrale.

Selon une première variante, au moins un des paramètres représentatifs de conditions d'envoi est représentatif de l'envoi d'information en fonction d'une variation prédéterminée d'une information.

Selon une seconde variante, au moins un des paramètres représentatifs de conditions d'envoi est représentatif de l'envoi d'information à intervalles de temps prédéterminés.

Selon une troisième variante, au moins un des paramètres représentatifs de conditions d'envoi est représentatif de l'envoi d'information sur événement.

Dans un premier mode de réalisation particulier, les moyens de contrôle sont connectés à un dispositif de mesure de grandeurs électriques.

Dans un second mode de réalisation particulier, les moyens de contrôle sont connectés à un déclencheur électronique fournissant des informations représentatives de grandeurs électriques et des informations d'états.

Avantageusement, au moins une station comporte des moyens de stockage pour mémoriser temporairement des informations.

Selon l'invention, un procédé de communication entre une centrale et au moins une station comporte une phase de fonctionnement comportant :
- une étape de contrôle de conditions d'envoi d'information en fonction de paramètres de condition d'envoi, et
- une étape d'envoi d'information en fonction du contrôle de condition d'envoi.

De préférence, au moins un paramètre de condition d'envoi est représentatif de l'envoi d'information sur requête de la centrale.

Selon une première variante, au moins un paramètre de condition d'envoi est représentatif de l'envoi d'information en fonction d'une variation de valeur d'une information.

Selon une seconde variante, au moins un paramètre de condition d'envoi est représentatif de l'envoi d'information à intervalle de temps prédéterminés.

Dans un mode de réalisation préférentiel, le procédé de communication comporte une phase de paramétrage comportant :
- une étape d'envoi par la centrale à au moins une station de données représentatives de types d'information à envoyer, et
- une étape de mémorisation dans au moins une station des doutées représentatives de type d'information à envoyer.

Avantageusement, le procédé de communication comporte une phase de paramétrage comportant
- une étape d'envoi par la centrale à au moins une station des paramètres représentatifs de conditions d'envoi d'information, et
- une étape de mémorisation dans au moins une station des paramètres représentatifs de conditions d'envoi.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- La figure 1 représente un dispositif de communication connu,
- La figure 2 représente un dispositif de communication selon un mode de réalisation de l'invention,
- La figure 3 représente un dispositif de communication selon un mode de réalisation de l'invention comportant une station connectée à un déclencheur électronique.
- La figure 4 représente une phase de paramétrage d'un procédé de communication selon un mode de réalisation de l'invention.
- Les figures 5 et 6 représentent une première et une seconde phases de fonctionnement de procédés de communication selon des modes de réalisation de l'invention.

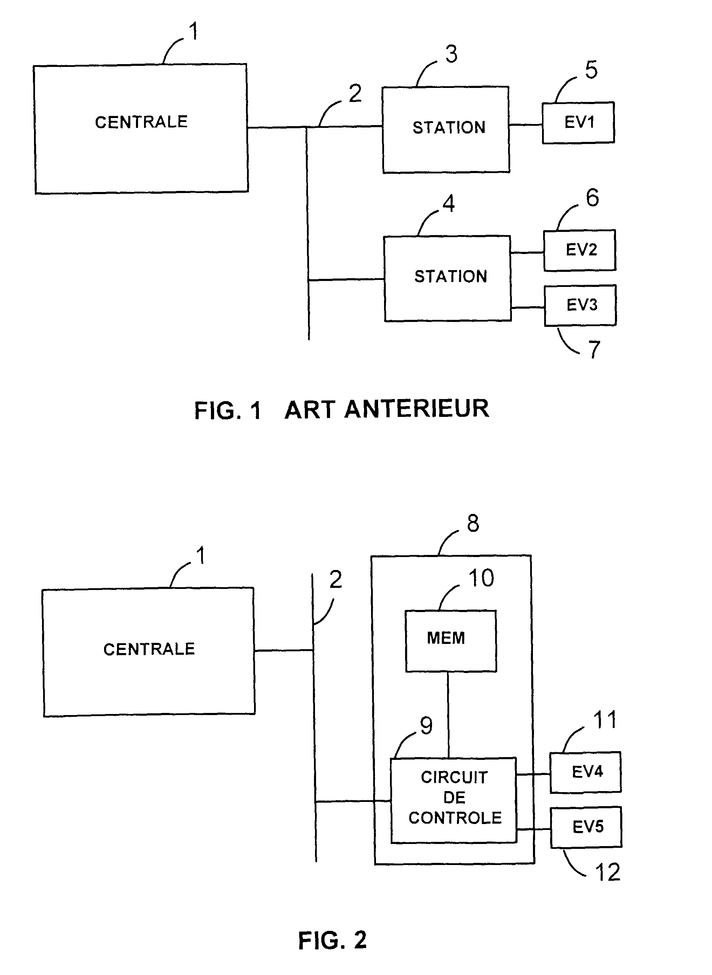

Le dispositif de communication de la figure 1 comporte de manière connue une centrale 1 connectée à un réseau de communication 2 et des stations 3 et 4 connectées aussi au réseau de communication. Dans ce mode de réalisation, la station 3 est reliée à un détecteur d'événements 5 et la station 4 est reliée à des détecteurs événements 6 et 7.

Si ce dispositif de communication :fonctionne en maître-esclave, la centrale 1 demande des informations aux stations 3 ou 4 qui lui répondent. Ce mode d'échange occupe deux fois le réseau à chaque demande d'information. Ainsi, lorsque des données doivent être souvent rafraîchies dans la centrale, le taux d'occupation du réseau devient très élevé.

Pour éviter le problème du double flux de doutées en maître-esclave, le dispositif de communication peut fonctionner en mode d'échange sur événement. Dans ce cas, un nombre important d'informations peut arriver à la centrale. Parmi ces informations, une grande partie risque de ne pas être systématiquement utilisée. Ce flux d'informations inutiles augmente le taux d'occupation du réseau.

Dans des dispositifs selon des modes de réalisation de l'invention, les stations comportent des moyens de contrôle de l'envoi d'information à la centrale de manière à optimiser le flux d'information dans le réseau de communication. Ainsi, les stations envoient des informations à la centrale selon des critères d'envoi prédéterminés. Ces critères sont associés à des informations ou à des types d'information. Par exemple, une station peut envoyer certaines informations sur requête de la centrale et d'autres informations sur événement.

La figure 2 représente un schéma bloc d'un dispositif de communication selon un mode de réalisation de l'invention. Une station 8 connectée au réseau de communication 2 comporte un circuit de contrôle 9 de l'envoi d'information connecté au réseau et un circuit de mémorisation 10 connecté au circuit de contrôle 9. Des détecteurs d'événements 11 et 12 connectés au circuit de contrôle 9 fournissent des informations à la station.

Le circuit de mémorisation 10 permet de mémoriser des paramètres de conditions d'envoi associés à des informations ou à des types d'information. Les paramètres de conditions d'envoi correspondent par exemple, à des envois d'information sur requête de la centrale, sur variation d'une valeur de certaines variables, à intervalles de temps prédéterminé, ou lorsqu'un événement est détecté. Ainsi, le circuit 9 contrôle l'envoi d'information en fonction des paramètres mémorisés dans le circuit de mémorisation.

Le paramétrage du circuit de mémorisation peut être fait de manière fixe ou de manière dynamique lors d'une phase de paramétrage. Pendant cette phase de paramétrage, la centrale indique à la station concernée les informations qu'elle doit recevoir et les paramètres de conditions d'envoi associés à chaque information. Dans ce mode de réalisation, le flux d'informations dans le réseau est optimisé puisque la station n'envoie que les informations nécessaires à la centrale pour l'application à laquelle elle est destinée.

Si l'application de la centrale change, une autre phase de paramétrage peut permettre de changer les informations et les paramètres d'envoi d'information de la station vers la centrale.

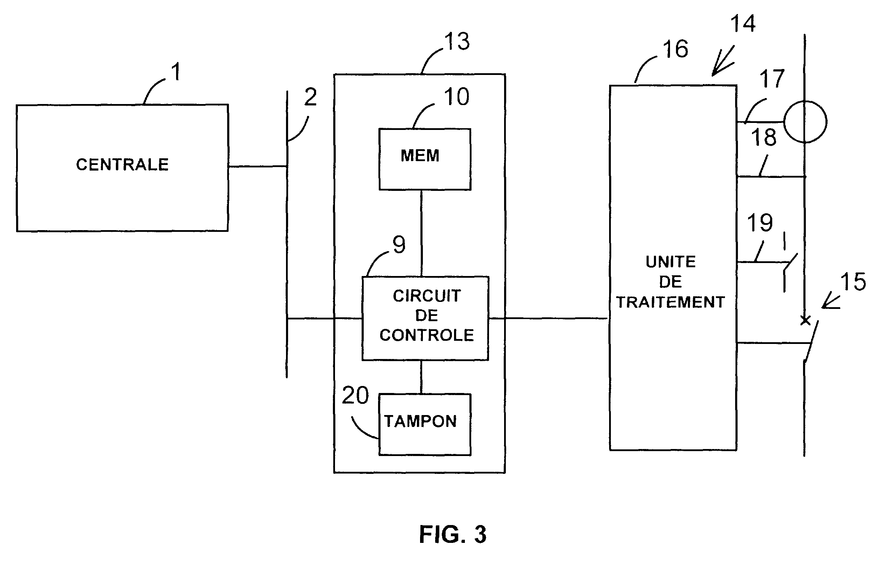

La figure 3 représente un mode de réalisation d'un dispositif selon l'invention comportant une station 13 associée à un déclencheur électronique 14 d'un disjoncteur 15. Le déclencheur électronique comporte une unité de traitement 16 connectée à la station 13. Cette unité de traitement reçoit des signaux représentatifs de courants, des signaux représentatifs de tension, et par exemple des signaux représentatifs de l'état des contacts électriques. L'unité de traitement fournit un ordre d'ouverture des contacts principaux du disjoncteur en fonction des signaux qu'elle reçoit.

L'unité de traitement calcule un nombre important de grandeurs électriques ou physiques en fonction des signaux représentatifs de courants ou de tensions. Ces grandeurs sont notamment des valeurs efficaces, crêtes ou moyennes ainsi que des harmoniques, des courants ou des tensions ; des valeurs de puissance, des déphasages et de l'énergie électrique fournie à travers le disjoncteur ; des valeurs représentatives de fonctions de déclenchement de courants de défaut ou d'échauffement. L'ensemble de ces grandeurs ainsi que d'autres, représentatives notamment de réglages de l'unité de traitement tels que des seuils ou des temporisations, peuvent être envoyées à la centrale 1 à travers la station 13.

Lors d'une phase de paramétrage, la centrale envoie à la station des données représentatives des informations qu'elle doit recevoir et des paramètres de conditions d'envoi associés aux informations. Les données et les paramètres sont mémorisés dans le circuit 10 pour être utilisées par le circuit de contrôle 9. Ensuite, pendant la phase de fonctionnement, l'unité de traitement envoie à la station les grandeurs dont elle dispose sous la forme d'informations. Le circuit de contrôle envoie des informations à la centrale en fonction des paramètres mémorisés dans le circuit de mémorisation 10. La station peut avantageusement comporter un circuit tampon 20 pour stocker temporairement les informations fournies par l'unité de traitement.

Dans le mode de réalisation de la figure 3, lors de la phase de paramétrage, la centrale peut par exemple demander à recevoir des informations d'ouverture ou de fermeture de contacts dès que ces événements apparaissent, des informations de variation de tension ou de courant lorsque celles-ci sont détectées par le circuit de contrôle, des informations de puissance électrique à intervalle de temps prédéterminé ou des valeurs de déphasage lorsque la centrale les demande.

Afin d'optimiser le flux d'information dans le réseau, les informations dont la centrale a besoin de manière fréquente ou rapide sont envoyées automatiquement par la station sur événement ou à intervalle de temps prédéterminé, et les informations qui concernent la centrale de manière aléatoire ou qui ne doivent pas être fréquemment rafraîchies sont envoyées de préférence sur requête de la centrale.

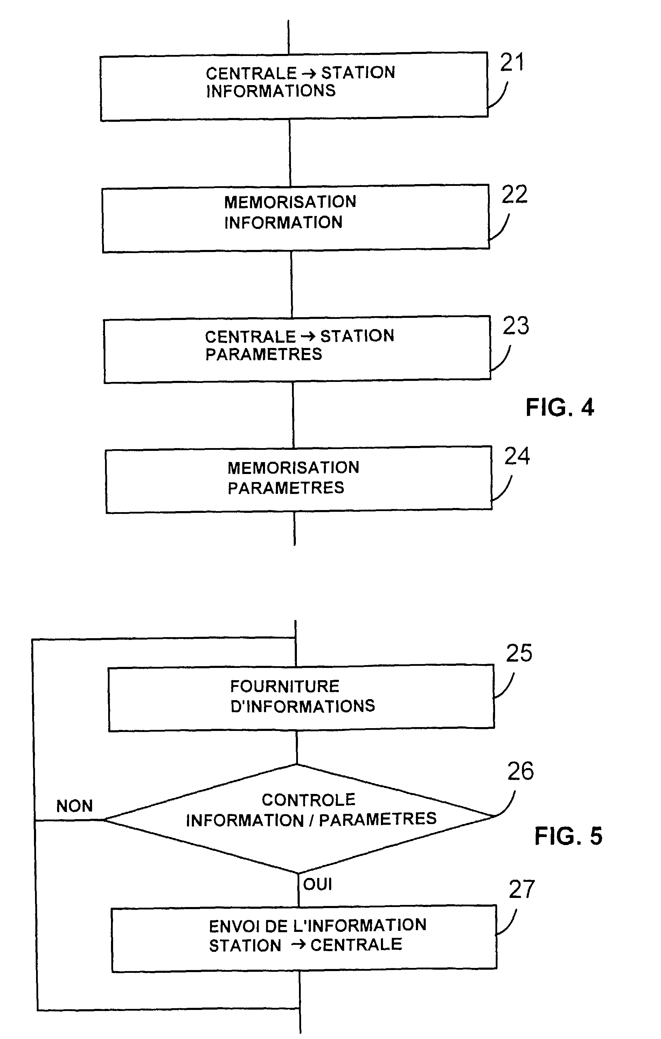

La figure 4 représente un organigramme d'une phase de paramétrage d'un procédé de communication selon l'invention.

Lors d'une première étape 21, la centrale envoie à une station des données représentatives des informations ou des types d'information qu'elle doit recevoir. Puis, à une étape 22, ces données sont mémorisées dans la station. Ensuite, lors d'une étape 23, la centrale envoie à la station des paramètres de conditions d'envoi, et à une étape 24 ces paramètres sont mémorisés.

Les étapes 21 et 23 peuvent aussi être groupées en une seule étape où les données représentatives des informations et les paramètres de conditions d'envoi sont envoyés dans une seule trame. Dans ce cas, les données et les paramètres sont mémorisés, par exemple, dans l'ordre de leur arrivée à la station.

L'organigramme de la figure 5 représente une phase de fonctionnement dans un mode de réalisation d'un procédé selon l'invention. A une étape 25, des informations sont fournies à la station. Ces informations représentent par exemple, des grandeurs électriques ou des événements tels que l'ouverture de contacts ou le déclenchement d'un disjoncteur. Puis, lors d'une étape 26, le circuit de contrôle détermine en fonction des données et des paramètres mémorisés si des informations doivent être envoyées et dans quelles conditions. Ainsi, si des conditions d'envoi sont respectées, la station envoie les informations lors d'une étape 27.

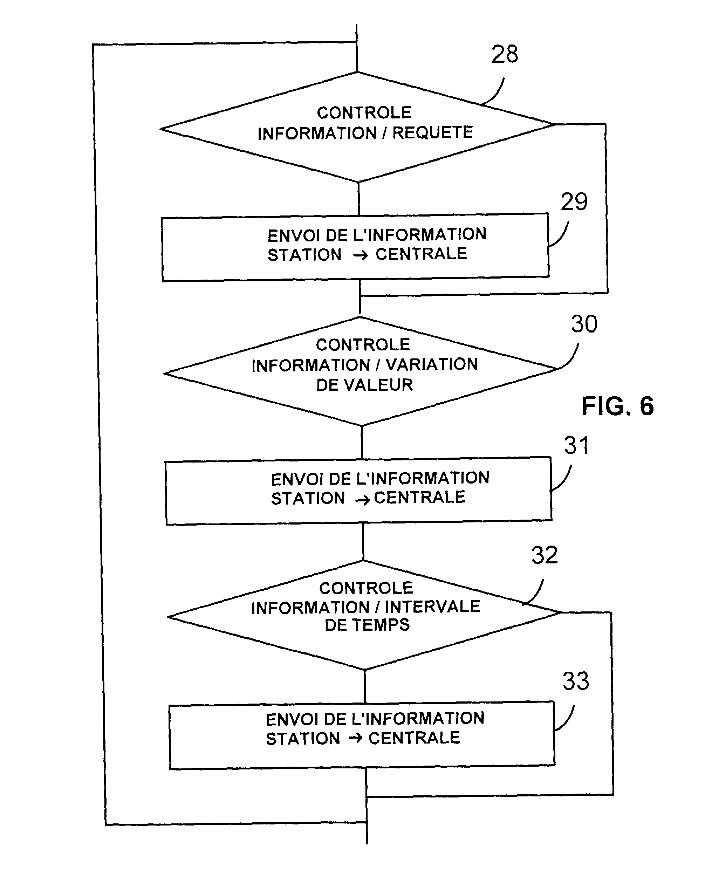

La figure 6 représente un organigramme détaillé d'une phase de fonctionnement d'une station. Dans une première étape 28, le circuit de contrôle vérifie si une information doit être envoyée sur requête de la centrale, puis envoie ladite information si la condition est respectée. Lors d'une étape 30, le circuit de contrôle vérifie si la valeur d'une information a varié d'une valeur prédéterminée, puis il envoie ladite information à la centrale (étape 31) si cette variation est effective. Ensuite, à une étape 32, le circuit de contrôle attend des intervalles de temps prédéterminés avant d'envoyer à la centrale lors d'une étape 33, des informations concernées par lesdits intervalles.

Les conditions d'envoi décrites ci-dessus ne sont pas limitatives. Dans d'autres modes de réalisation, il est possible d'utiliser d'autres conditions d'envoi. Ces conditions peuvent être complexes. Par exemple, une condition d'envoi peut être une combinaison de plusieurs conditions. De même, une information peut être envoyée selon plusieurs conditions distinctes par exemple, sur requête de la centrale et selon un intervalle de temps prédéterminé.

Les détecteurs d'événements 6, 7, 11 et 12 représentent toutes applications associées aux stations et pouvant générer des informations à envoyer à la centrale. Ces détecteurs peuvent être des déclencheurs électroniques comme sur la figure 3, des relais, des dispositifs de mesure, ou d'autres dispositifs de surveillance.

## Revendications

1. Dispositif de communication comportant :
- une centrale (1), et
- au moins une station (3, 4, 8, 13),
caractérisé en ce que au moins une station (8, 13) comporte des moyens (10, 22, 24) de mémorisation de données représentatives de types d'information à envoyer et des moyens (10, 22, 24) de mémorisation de paramètres représentatifs de conditions d'envoi d'information de la station vers la centrale, associés aux données représentatives de types d'information à envoyer.

2. Dispositif de communication selon la revendication 1, caractérisé en ce que au moins une station comporte des moyens (9, 26, 29, 31, 33) de contrôle pour envoyer des informations définies par des données de type d'information à envoyer en fonction des paramètres représentatifs de conditions d'envoi.

3. Dispositif de communication selon l'une des revendications 1 et 2, caractérisé en ce que au moins un des paramètres représentatifs de conditions d'envoi est représentatif de l'envoi d'information sur requête de la centrale.

4. Dispositif de communication selon l'une quelconque des revendications 1 à 3 caractérisé en ce que au moins un des paramètres représentatifs de conditions d'envoi est représentatif de l'envoi d'information en fonction d'une variation prédéterminée d'une information.

5. Dispositif de communication selon l'une quelconque des revendications 1 à 4 caractérisé en ce que au moins un des paramètres représentatifs de conditions d'envoi est représentatif de l'envoi d'information à intervalle de temps prédéterminé.

6. Dispositif de communication selon l'une quelconque des revendications 1 à 5, caractérisé en ce que au moins un des paramètres représentatifs de conditions d'envoi est représentatif de l'envoi d'information sur événement.

7. Dispositif de communication selon l'une quelconque des revendications 2 à 6, caractérisé en ce que les moyens de contrôle (9) sont connectés à un dispositif (14) de mesure de grandeurs électriques.

8. Dispositif de communication selon l'une quelconque des revendications 2 à 7, caractérisé en ce que les moyens de contrôle (9) sont connectés à un déclencheur électronique (14) fournissant des informations représentatives de grandeurs électriques et des informations d'états.

9. Dispositif de communication selon l'une quelconque des revendications 2 à 8, caractérisé en ce que au moins une station comporte des moyens de stockage (20) pour mémoriser temporairement des informations.

10. Procédé de communication entre une centrale (1) et au moins une station (2) caractérisé en ce qu'il comporte une phase de fonctionnement comportant :
- une étape (26, 28, 30, 32) de contrôle de conditions d'envoi d'information en fonction de paramètres de condition d'envoi, et
- une étape (27, 29, 31, 33) d'envoi d'information en fonction du contrôle de condition d'envoi.

11. Procédé de communication selon la revendication 10 caractérisé en ce que au moins un paramètre de condition d'envoi (28) est représentatif de l'envoi d'information sur requête de la centrale.

12. Procédé de communication selon l'une des revendications 10 ou 11, caractérisé en ce que au moins un paramètre de condition d'envoi (30) est représentatif de l'envoi d'information en fonction d'une variation de valeur d'une information.

13. Procédé de communication selon l'une quelconque des revendications 10 à 12, caractérisé en ce que au moins un paramètre de condition (32) d'envoi est représentatif de l'envoi d'information à intervalle de temps prédéterminé.

14. Procédé de communication selon l'une quelconque des revendications 10 à 13 caractérisé en ce qu'il comporte une phase de paramétrage comportant :
- une étape d'envoi (21) par la centrale à au moins une station de données représentatives de types d'information à envoyer, et
- une étape (22) de mémorisation dans au moins une station des données représentatives de type d'information à envoyer.

15. Procédé de communication selon l'une quelconque des revendications 10 à 14, caractérisé en ce qu'il comporte une phase de paramétrage comportant :
- une étape (23) d'envoi par la centrale à au moins une station des paramètres représentatifs de conditions d'envoi d'information, et
- une étape (24) de mémorisation dans au moins une station des paramètres représentatifs de conditions d'envoi.
